# DEMANDE DE BREVET EUROPEEN

(11) **EP 1 316 596 A1**
(43) Date de publication de la demande: **04.06.2003**
(21) Numéro de dépôt: 02292880.8
(22) Date de dépôt: 20.11.2002
(51) Int. Cl.: C09J 7/02, C09J 7/04

(54) **Feuille adhésive et faisceau d'éléments conducteurs allongés gainé à l'aide d'une telle feuille**

(30) Priorité: 28.11.2001 FR 0115357
(71) Demandeur: PLASTO S.A., 21300 Chenôve (FR)
(72) Inventeur: Durand, Hervé, 21000 Dijon (FR); Lebastard, Etienne, 21370 Velars-sur-Ouche (FR)
(74) Mandataire: Briat, Sophie

(57) **Abrégé**

L'invention concerne une bande ou feuille adhésive (10), du type comprenant un support tricoté (20) avec des fils fins synthétiques, ledit support tricoté (20) comportant une première face continue (22) laissant apparaître des mailles régulièrement espacées et une seconde face (24) dont les mailles forment des lanières (28) qui délimitent des cavités (26) régulièrement espacées avec un pas d'environ 2 à 8 mm dans le sens trame et dans le sens chaîne, ledit support tricoté (20) formant, depuis la dite seconde face (24) et sensiblement sur toute son épaisseur, un relief du type nid d'abeille, et une couche de masse adhésive (30; 44) sensible à la pression fortement cohésive disposée du côté de ladite première face continue (22).

Application industrielle pour la protection et l'insonorisation, notamment pour le gainage des faisceaux de fils électriques dans les véhicules à moteurs, en particulier dans les automobiles.

## Description

La présente invention concerne une nouvelle feuille ou bande adhésive sensible à la pression, utilisable industriellement notamment pour le gainage des faisceaux de fils électriques dans les véhicules à moteurs, en particulier dans les automobiles.

La présente invention concerne également un article à trois dimensions obtenu par thermoformage à partir d'une telle bande ou feuille, ainsi que le rouleau obtenu par enroulement sur elle même d'une telle bande adhésive.

La présente invention concerne aussi un faisceau d'éléments conducteurs allongés gainé à l'aide d'une telle bande adhésive.

On connaît déjà de nombreuses solutions techniques faisant appel à des bandes adhésives ou non adhésives pour réaliser des protections et des insonorisations dans le domaine technique relatif aux automobiles.

On connaît déjà de nombreuses solutions techniques pour réaliser des protections et des insonorisations dans le domaine des automobiles.

Par exemple, pour maintenir et protéger les faisceaux de fils, les documents EP 617691, EP 661774, EP 668336, EP 685546, EP 716136, EP 716137, EP 886358, WO 9950943 proposent divers supports plus ou moins complexes pour fabriquer des rubans adhésifs destinés à enrubanner les faisceaux de fils ou de câbles électriques ou de fibres optiques et former une gaine capable de maintenir les faisceaux et éviter les bruits générés par d'éventuels chocs ou frictions agressives entre le ou les faisceaux et la carrosserie.

Parmi ces propositions, certaines mettent en oeuvre des supports non tissés dont les propriétés sont améliorées par des films ou des tissus contrecollés, par des fils cousus ou par des traitements thermiques ou mécaniques particuliers.

Les bandes complexes très résistantes décrites dans le document WO 9950943 protègent notamment les faisceaux électriques lors de leur passage dans des corps creux. L'avantage des supports non tissés réside dans leur faible coût. Cependant, ils doivent être assez épais pour présenter une bonne résistance mécanique, mais présentent alors une flexibilité insuffisante pour se plier facilement autour des faisceaux électriques de faible diamètre.

Un autre point délicat à résoudre concerne le déroulement des bandes adhésives présentées en rouleau avant utilisation. La protection de la surface adhésive est généralement faite au moyen d'une feuille antiadhérente qui doit être enlevée lors de la pose : cette feuille augmente les coûts et constitue un déchet encombrant.

Un autre moyen de protection de la surface adhésive consiste à traiter la face non adhésive à l'aide d'une substance antiadhérente de façon à permettre le déroulement de la bande sans endommager la surface adhésive. Cette solution augmente également les coûts de fabrication et ne permet pas d'effectuer une protection des faisceaux de câbles électriques par enrubannage en spirale.

Il existe donc un besoin industriel pour la bande autoadhésive capable de bien protéger les faisceaux d'éléments conducteurs allongés (fils électriques ou tout autre élément conducteur allongé tel que fibre optique, petit tuyau....) et dont l'utilisation dans les ateliers soit facile et pratique.

La présente invention propose une bande ou une feuille adhésive pour la protection et l'insonorisation qui réponde à ce besoin, particulièrement pour le gainage des faisceaux d'éléments conducteurs allongés ou le revêtement de compartiments dans les automobiles.

La bande ou la feuille adhésive pour la protection et l'insonorisation selon la présente invention est du type complexe adhésif comprenant un support tricoté avec des fils synthétiques fins ou très fins, ledit support tricoté comportant une première face continue laissant apparaître des mailles régulièrement espacées et une seconde face dont les mailles forment des lanières qui délimitent des cavités régulièrement espacées avec un pas d'environ 2 à 8 mm dans le sens trame et dans le sens chaîne, ledit support tricoté formant, depuis la dite seconde face et sensiblement sur toute son épaisseur, un relief du type nid d'abeille, et une couche de masse adhésive sensible à la pression fortement cohésive disposée du côté de ladite première face continue.

On entend par l'expression « sensible à la pression » le fait que la masse adhésive permet l'adhérence de la bande ou feuille adhésive sur la surface avec laquelle elle rentre en contact par simple pression.

Suivant un aspect particulier de l'invention, le support tricoté présente une épaisseur comprise environ entre 0,5 et 6 mm, préférentiellement entre 0,8 et 4 mm.

Suivant un autre aspect de l'invention, les cavités représentent entre 10 et 75 %, préférentiellement 20 à 80 % en surface de ladite seconde face.

Suivant encore un autre aspect de l'invention, la masse adhésive constituant la couche adhésive est du type acrylique en phase solvant, enduite préférentiellement selon un procédé transfert.

Suivant un autre aspect de l'invention, la masse adhésive constituant la couche adhésive est du type acrylique en phase solvant, et est fixée sur la première face du support selon une technique faisant appel à un fin film support adhésivé double face.

Suivant un autre aspect de l'invention, la bande adhésive est présentée sous forme d'un rouleau obtenu par enroulement sur elle même de la bande adhésive, le rouleau ne nécessitant pas l'interposition d'une feuille antiadhérente entre deux spires consécutives.

Selon un autre aspect de l'invention, la bande ou feuille comprend en outre une couche de mousse polyoléfine (polyéthylène ou polypropylène) thermoformable intercalée entre le support tricoté et la couche de masse adhésive. De préférence, les deux faces de la feuille de mousse se présentent sous forme d'une peau et l'assemblage du support tricoté et de la feuille de mousse est réalisé à l'aide d'un adhésif acrylique.

Selon un autre aspect de l'invention, la bande ou feuille adhésive comprend un film adhésif double face comportant un film de polyoléfine recouvert, sur chacune de ses faces, d'une couche adhésive, l'une des dites couches adhésives recouvrant ladite première face continue afin de relier ledit film adhésif double face audit support tricoté, et l'autre des dites couches adhésives formant ladite couche de masse adhésive sensible à la pression fortement cohésive.

Selon encore un autre aspect, la présente invention porte sur un article à trois dimensions obtenu par thermoformage à partir d'une bande ou d'une feuille définie précédemment. Dans ce cas, de préférence, ledit article est obtenu à partir à partir d'une bande ou d'une feuille dans laquelle ladite feuille de mousse de polyoléfine est réalisé en polypropylène non réticulé.

La présente invention concerne également un faisceau d'éléments conducteurs allongés gainé obtenu à partir d'un faisceau d'éléments conducteurs allongés entouré, au moins sur une partie de la longueur dudit faisceau, par une bande adhésive selon la présente invention, la seconde face du support tricoté étant tournée en direction opposée audit faisceau d'éléments conducteurs allongés.

Dans ce cas, ladite bande forme une gaine qui entoure, de préférence de manière continue, ledit faisceau d'éléments conducteurs allongés, soit selon un enroulement en spirale (enrubannage), soit selon un enveloppement longitudinal dans lequel les deux bords longitudinaux de ladite bande referment ladite gaine par contact de ladite couche de masse adhésive sur elle-même (gainage dit en « drapeau »).

L'invention sera mieux comprise, et des caractéristiques secondaires et leurs avantages apparaîtront au cours de la description de modes de réalisation donnée ci-dessous à titre d'exemple.

Il est entendu que la description et les dessins ne sont donnés qu'à titre indicatif et non limitatif.

Il sera fait référence aux dessins annexés, dans lesquels :
- la figure 1 est un schéma simplifié formé d'une vue en perspective partielle du support tricoté appartenant à la bande ou à la feuille selon la présente invention, depuis sa seconde face,
- la figure 2 est une vue similaire à celle de la figure 1, depuis la première face du support tricoté,
- la figure 3 est une vue agrandie du détail III de la figure 1,
- la figure 4 est une vue en coupe longitudinale schématique d'une bande ou d'une feuille selon la présente invention, et
- les figures 5 et 6 représentent une vue en coupe longitudinale schématique de deux variantes de réalisation de la bande ou feuille selon la présente invention.

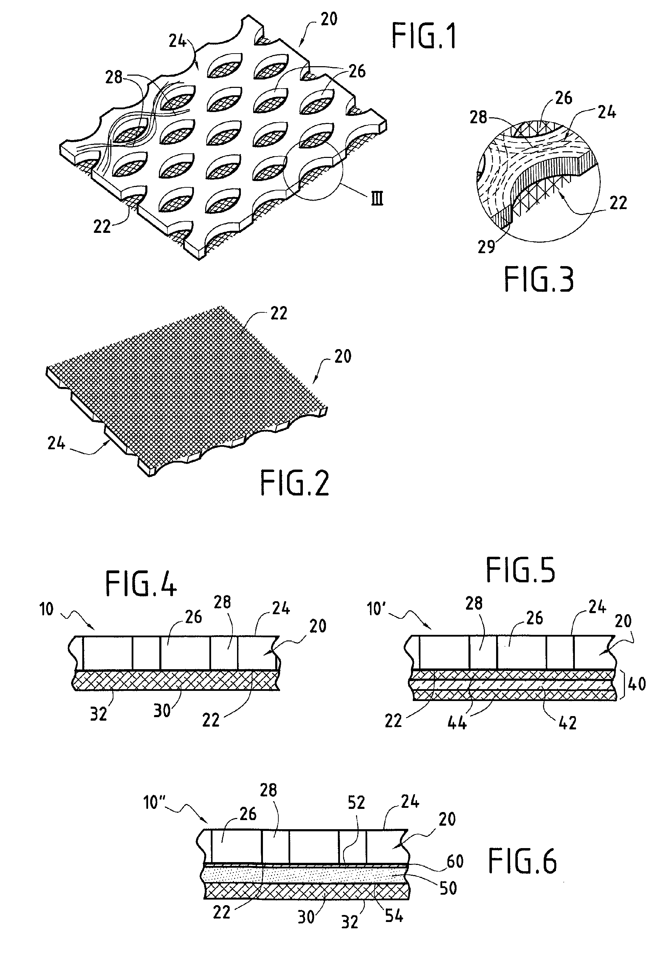

La bande ou la feuille adhésive 10 selon l'invention comprend un support 20 tricoté suivant un maillage indémaillable, essentiellement à partir de fils fins en polyester ou en polyamide (voir figures 1 à 3). Par fils fins, on entend des fils de titre inférieur à 32 dtex, préférentiellement des fils de titre inférieur à 12 dtex (fils très fins), ces fils étant constitués de un ou plusieurs brins.

Le tricotage permet d'obtenir une structure à trois dimensions, avec une première face 22 continue et plane constituée de mailles régulièrement réparties sur toute la surface et une seconde face 24 constituée de mailles disposées en un réseau. Ce réseau délimite des cavités 26 et conduit à former une structure en nid d'abeille depuis la seconde face 24 du support tricoté 20, les cavités 26 étant espacées d'environ 2 à 8 mm avec, entre les cavités, des fragments 28 sensiblement pleins en forme de lanière de surface plane ou sensiblement plane.

L'épaisseur du support tricoté 20 est comprise entre 0,5 et 6 mm en l'absence de contrainte, et présente une faible résistance à la compression. Un tel tissu tricoté, dont le poids surfacique est de l'ordre de 50 à 450 g/m², préférentiellement 120 à 300 g/m² présente une très bonne flexibilité, de bonnes propriétés d'amortissement des chocs et des bruits ainsi qu'une excellente résistance au déchirement et à la lacération.

La première face 22 continue est recouverte d'une couche de masse adhésive 30 fortement cohésive pour constituer une bande autoadhésive 10 (voir figure 4) formant un complexe auto adhésif.

Compte tenu de l'aspect de surface du support tricoté 20, on utilise une masse adhésive 30 de type acrylique en phase solvant, préalablement enduite et séchée sur un support antiadhérent de façon à constituer un film de masse adhésive que l'on enduit ensuite selon le procédé transfert sur le support tricoté, le support antiadhérent étant alors retiré et réutilisé.

On choisit une masse adhésive 30 fortement cohésive, avec un pouvoir adhésif compris entre 1,5 et 5 N/cm. La quantité de masse adhésive déposée est de l'ordre de 35 à 100 g/m², préférentiellement 40 à 75 g/m².

En variante du procédé d'enduction par transfert, on peut (voir figure 5) utiliser un film adhésif double face 40, comprenant par exemple un film 42 très fin (de préférence en polyester ou en polypropylène), d'épaisseur comprise entre 10 et 30 µm, recouvert sur chacune de ses faces d'une couche adhésive 44 de type acrylique. L'utilisation de ce second procédé d'adhésivation permet d'obtenir une bande adhésive complexe 10' combinant des propriétés d'insonorisation et protection mécanique du support tricoté 20 et les propriétés d'imperméabilité du film 42 supportant les deux couches adhésives 44.

Le complexe 10' réalisé selon la description précédente est découpé en rubans dont la largeur, dépendante de la dimension du faisceau de fils, est comprise entre 2 et 6 cm et les rubans sont enroulés sans protecteur pour être conditionnés sous forme de rouleaux. En effet, compte tenu de la faible adhérence entre la face libre 32 de la masse adhésive 30 (complexe 10), ou de la couche adhésive 44 (complexe 10'), et la seconde face 24 du support tricoté 20 (matériau peu adhérent non traité et présence des cavités 26), le ruban enroulé sur lui-même se déroule aisément.

Les rouleaux sont ensuite utilisables sur des machines ou manuellement pour former la gaine autour des faisceaux de fils.

Selon les techniques connues de l'homme du métier, la gaine peut être obtenue soit par enroulement en spirale autour du faisceau (enrubannage), soit par enroulement après pliage suivant l'axe longitudinal et assemblage des deux lisières du ruban 10 ou 10' par contact sur elle-même de leur face 32 adhésive (montage en drapeau).

Selon une autre variante de réalisation de la bande adhésive 10" selon l'invention, telle qu'illustrée sur la figure 6, on intercale une feuille 50 de mousse de polyoléfine entre le support tricoté 20 et la couche de masse adhésive 30.

Pour réaliser une telle bande 10", on utilise préférentiellement une feuille 50 de mousse de polypropylène non réticulé, d'épaisseur comprise entre 0,5 et 4 mm, et présentant ses deux faces 52, 54 sous forme d'une peau, c'est-à-dire d'une surface lisse. La densité de la feuille 50 de mousse est d'environ 30 à 70 kg/m³.

Le support tricoté 20 est assemblé, par sa première face 22, à l'une (52) des faces de la feuille 50 de mousse de polyoléfine, soit au moyen d'un poudrage ou d'un film thermo-collant, soit préférentiellement, au moyen d'une couche de masse adhésive acrylique 60.

Afin d'assurer un assemblage solide entre le support tricoté 20 et la feuille 50 de mousse de polyoléfine, les faces 22 et 52 en contact sont soumises, préalablement à l'enduction de la couche adhésive 60, à un traitement de type « CORONA » ou à tout autre traitement de surface améliorant les propriétés d'accrochage de la couche adhésive.

Après assemblage, la face libre 54 de la feuille 50 de mousse est à son tour enduite d'une couche de masse adhésive 30 de caractéristiques analogues à la couche de masse adhésive acrylique 60 utilisée lors de la réalisation précédente.

Cette variante, qui comprend une feuille 50 de matière légère et thermoformable peut être utilisée avantageusement pour fabriquer des habillages de certaines parties des automobiles lorsqu'il est nécessaire de préformer ledit habillage de façon à lui faire épouser une structure à trois dimensions.

A titre d'exemple, le complexe pré-adhésivé 10, 10' ou 10" selon l'invention, peut être thermoformé pour obtenir un habillage de capot moteur, de coffre, de pavillon de toit ou de parois internes de l'habitacle.

Selon un exemple préférentiel, mais non limitatif, de réalisation de l'invention, on utilise un support tricoté 20 en fils polyester (obtenu de la société T.I. GEISA, S.L. VILADECAVALLS Espagne sous la référence 457/RED PORTO) présentant une première face 22 continue, une seconde face 24 d'aspect nid d'abeille, une épaisseur d'environ 3 mm et une masse surfacique de 265 g/m².

Un tel support tricoté 20 est représenté sur les figures 1 à 3 : en particulier sur le détail de la figure 3, représentant le bord de ce support tricoté 20, on voit que les portions 29 des fils s'étendant entre la première face 22 et la seconde face 24 sont sensiblement parallèles entre eux et perpendiculaires aux faces 22 et 24. Cette disposition particulière des portions de fils 29 engendre, pour le support tricoté 20, outre une faible résistance à le compression, un effet « ressort » dû à sa grande élasticité en compression.

La première face 22 est soumise à un traitement de type « CORONA » puis complexée, c'est-à-dire assemblée, avec une couche de masse adhésive 30 de type acrylique phase solvant (obtenue de la société AV Chemie sous la référence XPE 376) par le procédé de transfert. Le grammage de la couche de masse adhésive 30 est d'environ 65 g/m². Après transfert de la couche de masse adhésive 30, la feuille antiadhérente est retirée (on peut la réutiliser pour la même fabrication) et la bande adhésivée 10 ainsi formée (voir figure 4) est découpée en rubans qui sont enroulés sans protecteur.

Ces bobines de ruban adhésif sont utilisables pour former des gaines autour des faisceaux de fils, soit par enroulement en spirale avec recouvrement, soit par enveloppement longitudinal et fermeture par contact des deux bords adhésifs de la bande 10 (gainage en cavalier ou en drapeau).

En variante (voir figure 6), le support tricoté 20 décrit à l'exemple de réalisation précédent est complexé au moyen d'une couche de masse adhésive acrylique 30 avec une feuille de mousse 50 de polypropylène non réticulé d'épaisseur 2,2 mm et densité voisine de 45 kg/m³ (obtenue auprès de la société PSG Sentinel).

La première face 22 du support tricoté et les deux faces 52, 54 sous forme de peau de la feuille de mousse 50 sont préalablement traitées selon le procédé « CORONA » puis un revêtement 60 de masse acrylique en phase solvant est appliqué sur la première face 52 de la feuille de mousse 50 à raison de environ 30 g/m². (On utilise une masse adhésive de référence XPE 376 commercialisée par la société AV Chemie) et le support tricoté 20 est complexé sur la face 52 adhésivée.

La seconde face 54 de la feuille de mousse est ensuite enduite d'une couche de masse adhésive 30 acrylique sensible à la pression. L'enduction est faite avec la même masse adhésive qui ci-dessus, à raison de environ 50 g/m².

On obtient ainsi un complexe adhésivé 10" selon l'invention avec une face 24 non adhésivée se présentant sous forme d'un tricot « nid d'abeille » et une face 32 adhésivée.

La présence de la feuille 50 de mousse en polypropylène non réticulé permet de fabriquer des plaques en trois dimensions par thermoformage sur une empreinte à dépression. On peut ainsi produire des habillages pour pavillon de toit, pour capot moteur ou pour diverses autres parties de la carrosserie d'un véhicule automobile.

Bien que cette invention trouve sa principale utilité dans le domaine de la fabrication des automobiles, les rubans ou feuilles adhésivées 10, 10' ou 10" telles que décrites précédemment sont utilisables dans le domaine de la construction de bâtiments ou d'articles électroménagers, notamment pour garnir des parois et/ou la face externe de certains composants dans le but d'amortir des bruits.

## Revendications

1. Bande ou feuille adhésive (10 ; 10' ; 10") pour la protection et l'insonorisation, du type comprenant un support tricoté (20) avec des fils fins synthétiques, ledit support tricoté (20) comportant une première face continue (22) laissant apparaître des mailles régulièrement espacées et une seconde face (24) dont les mailles forment des lanières (28) qui délimitent des cavités (26) régulièrement espacées avec un pas d'environ 2 à 8 mm dans le sens trame et dans le sens chaîne, ledit support tricoté (20) formant, depuis la dite seconde face (24) et sensiblement sur toute son épaisseur, un relief du type nid d'abeille, et une couche de masse adhésive (30; 44) sensible à la pression fortement cohésive disposée du côté de ladite première face continue (22).

2. Bande ou feuille adhésive (10 ; 10' ; 10") selon la revendication 1, **caractérisée en ce que** le support tricoté (20) présente une épaisseur comprise entre 0,5 et 6 mm, et préférentiellement entre 0,8 et 4 mm.

3. Bande ou feuille adhésive (10 ; 10' ; 10") selon l'une des revendications 1 ou 2, **caractérisée en ce que** les cavités (26) représentent entre 10 et 75 % et préférentiellement 20 à 80 % de la surface de ladite seconde face (24).

4. Bande ou feuille adhésive (10 ; 10' ; 10") selon l'une des revendications 1 à 3, **caractérisée en ce que** la masse adhésive (30) fortement cohésive est du type acrylique phase solvant.

5. Bande ou feuille adhésive (10") selon l'une des revendications précédentes, **caractérisée en ce qu'**elle comprend en outre une feuille de mousse (50) de polyoléfine thermoformable intercalée entre le support tricoté (20) et la couche de masse adhésive (30).

6. Bande ou feuille adhésive (10") selon la revendication 5, **caractérisée en ce que** les deux faces (52, 54) de la feuille de mousse (50) se présentent sous forme d'une peau.

7. Bande ou feuille adhésive selon la revendication 6, **caractérisée en ce que** l'assemblage du support tricoté (20) et de la feuille de mousse (50) est réalisé à l'aide d'un adhésif acrylique (60).

8. Bande ou feuille adhésive (10') selon l'une des revendications 1 à 4, **caractérisée en ce qu'**elle comprend un film adhésif double face (40) comportant un film (42) de polyoléfine recouvert, sur chacune de ses faces, d'une couche adhésive (44), l'une des dites couches adhésives (44) recouvrant ladite première face continue (22) afin de relier ledit film adhésif double face (40) audit support tricoté (20), et l'autre des dites couches adhésives (44) formant ladite couche de masse adhésive (30 ; 44) sensible à la pression fortement cohésive.

9. Article à trois dimensions obtenu par thermoformage à partir d'une bande ou d'une feuille (10 ; 10' ; 10") selon l'une quelconque des revendications précédentes.

10. Article selon la revendication 9, **caractérisé en ce qu'**il est obtenu à partir à partir d'une bande ou d'une feuille (10") selon la revendication 5, ladite feuille de mousse (50) de polyoléfine étant réalisée en polypropylène non réticulé.

11. Rouleau obtenu par enroulement sur elle même d'une bande adhésive (10 ; 10' ; 10") selon l'une quelconque des revendications 1 à 8.

12. Faisceau d'éléments conducteurs allongés gainé, **caractérisé en ce qu'**il est obtenu à partir d'un faisceau d'éléments conducteurs allongés entouré, au moins sur une partie de la longueur dudit faisceau, par une bande (10 ; 10' ; 10") adhésive selon l'une quelconque des revendications 1 à 8, la seconde face (24) du support tricoté (20) étant tournée en direction opposée audit faisceau d'éléments conducteurs allongés.

13. Faisceau selon la revendication 12, **caractérisé en ce que** ladite bande (10 ; 10' ; 10") forme une gaine en entourant de manière continue ledit faisceau d'éléments conducteurs allongés selon un enroulement en spirale.

14. Faisceau selon la revendication 12, **caractérisé en ce que** ladite bande (10 ; 10' ; 10") forme une gaine en entourant de manière continue ledit faisceau d'éléments conducteurs allongés selon un enveloppement longitudinal, les deux bords longitudinaux de ladite bande refermant ladite gaine par contact de ladite couche de masse adhésive (30 ; 44) sur elle-même.
